# EUROPÄISCHE PATENTANMELDUNG

(11) **EP 1 107 036 A1**
(43) Veröffentlichungstag der Anmeldung: **13.06.2001**
(21) Anmeldenummer: 00125752.6
(22) Anmeldetag: 24.11.2000
(51) Int. Cl.: G02B 7/182

(54) **Optische Einheit und deren Verwendung**

(30) Priorität: 09.12.1999 CH 226999
(71) Anmelder: Contraves Space AG, 8052 Zürich (CH)
(72) Erfinder: Herren, Andreas, 8121 Benglen (CH); Rugi, Elisabetta, 8157 Dielsdorf (CH); Sanvido, Saverio, 8152 Glattbrugg (CH); Neubert, Jakob, Dr., 8050 Zürich (CH); Haupt, Christoph, Dr., 8052 Zürich (CH)
(74) Vertreter: OK pat AG

(57) **Zusammenfassung**

In einer ersten Variante umfasst die neue optische Einheit (**10**) mehrere optische Elemente (**14.1, 14.2, 14.3, 14.4, 14.5**) und eine integral hergestellte Aufnahmestruktur (**12**) mit Elementträgern (**16.1, 16.2, 16.3, 16.4, 16.5**) für jedes der Elemente (**14.1, 14.2, 14.3, 14.4, 14.5**). Mindestens einer der Elementträger (**16.1, 16.2, 16.3, 16.4, 16.5**) ist durch einen einfach zusammenhängenden Körper, also einen Längsträgers (**16.4**) oder eine Platte (**16.1, 16.2, 16.3, 16.5**) bzw. Schale gebildet. Die Dimensionen dieses Elementträgers sind dem optischen Element (**14.1, 14.2, 14.3, 14.4, 14.5**) angepasst sind, wobei mindestens ein Teil der Elementträger **16.1, 16.2, 16.3, 16.4, 16.5** teilweise längs ihrer Berandung frei ist.

In einer zweiten Variante umfasst die optische Einheit (**10**) mindestens ein optisches Element (**14**) und einen integral hergestellten Elementträger (**16**) aus demselben Material, vorzugsweise Zerodur®. Das optische Element (**14**) wird vorzugsweise durch Verklebung unmittelbar im Elementträger (**16**) befestigt.

Die optische Einheit (**10**) mit den Merkmalen der ersten und/oder zweiten Variante eignet sich zur Verwendung als Bestandteil eines zum Einsatz im Weltraum bestimmten Gerätes, wobei die Aufnahmestruktur (**12**) mindestens annähernd isostatisch am Gerät befestigt ist.

## Beschreibung

Die Erfindung betrifft eine optische Einheit nach dem Oberbegriff des Anspruchs **1** bzw. **6** und eine Verwendung dieser optischen Einheit nach dem Oberbegriff des Anspruchs **11**.

Unter dem Begriff einer optischen Einheit sollen im Rahmen der vorliegenden Beschreibung Einheiten mit optischen Elementen wie Spiegeln und Linsen verstanden werden, also beispielsweise Spiegelteleskope und hierbei insbesondere, aber nicht ausschliesslich, sogenannte Schiefspiegler, das heisst Spiegelteleskope, deren Spiegel nicht koaxial angeordnet sind.

Die Genauigkeitsanforderungen, die an optische Einheiten gestellt werden, sind im allgemeinen verhältnismässig hoch. Besondere Anforderungen werden an optische Einheiten gestellt, die Teile von im Weltraum benutzten Gerätes bilden; diese müssen nicht nur hohen Genauigkeitsanforderungen genügen, sondern auch weltraumbedingte Randbedingungen erfüllen, die das Erreichen der hohen Genauigkeit erschweren. So muss insbesondere die Masse der optischen Einheit möglichst gering sein. Im weiteren müssen die optische Einheit und ihre Befestigung am Gerät so ausgebildet sein, dass der Transport in den Weltraum, der üblicherweise mit einer Rakete erfolgt und mit hohen statischen Belastungen und Vibrationen verbunden ist, schadlos überstanden wird. Schliesslich müssen die optische Einheit und ihre Befestigung am Gerät so ausgelegt sein, dass die im Weltraum vorkommenden hohen Temperaturdifferenzen und die durch diese Temperaturdifferenzen verursachten steilen Temperaturgradienten keine negativen Einflüsse auf das Gerät und die optische Einheit ausüben; hierbei können die Extremaltemperaturen weit ausserhalb des Bereiches üblicher terrestrischer Umgebungstemperaturen liegen.

Bislang sind für die Verwendung im Weltall im Wesentlichen zwei Typen von optischen Einheiten bekannt. Beim ersten Typ sind die optischen Elemente koaxial angeordnet, die Aufnahmestruktur besitzt annähernd die Form eines Rohres, gegebenenfalls mit Rohrabzweigungen, und die optischen Elemente, also Spiegel- und Linsenanordnungen, sind in diesem Rohr aufgenommen bzw. etwa rotationssymmetrisch von diesem Rohr bzw. den Rohrabzweigungen umschlossen. Beim zweiten Typ sind die optischen Elemente nicht koaxial angeordnet, die Aufnahmestruktur besitzt im wesentlichen die Form eines geschlossenen Kastens, und die optischen Elemente sind in Flächen dieses Kastens befestigt. Der Nachteil sowohl der rohrartigen wie auch der kastenartigen Aufnahmestrukturen ist im wesentlichen darin zu sehen, dass sie zu schwer sind; sie weisen nämlich im allgemeinen eine durchwegs gleiche Wandstärke auf, welche auf denjenigen Elementträger dimensioniert ist, welcher der höchsten Beanspruchung unterliegt, was zur Folge hat, dass die Aufnahmestruktur für die Bereiche anderer, weniger stark beanspruchter Elementträger überdimensioniert ist. Im weiteren sind sowohl die rohrartigen wie auch die kastenartigen Aufnahmestrukturen im Hinblick auf die thermischen Belastungen ungünstig, da sie eine im wesentlichen geschlossenen Hülle bilden.

Ein weiterer Nachteil der bisher bekannten optischen Einheiten ist darin zu sehen, dass die optischen Elemente und ihre Elementträger unterschiedliche Wärmedilatationen aufweisen, was die Präzision der gegenseitigen Lage und auch die Haltbarkeit der gegenseitigen Verbindung negativ beeinflusst.

**Aufgabe** der Erfindung ist es daher,
- eine optische Einheit der eingangs genannten Art zu schaffen, mit welcher die Nachteile der Strukturen gemäss dem Stande der Technik vermieden werden;
- eine optische Einheit der eingangs genannten Art vorzuschlagen, welche das Problem unterschiedlicher thermisch bedingter Dilatationen von Struktur und optischem Element vermeidet, und
- eine Verwendung der neuen optischen Einheiten im Weltraum vorzuschlagen.

Die **Lösung** dieser Aufgabe erfolgt erfindungsgemäss
- für die optische Einheit durch die Merkmale des Anspruchs **1** bzw. **6**, und
- für deren Verwendung durch die Merkmale des Anspruchs **11**.

Vorteilhafte Weiterbildungen der optischen Einheit werden durch die abhängigen Ansprüche **2** bis **5** und **7** bis **10** definiert, vorteilhafte Weiterbildungen der Verwendung durch den abhängigen Anspruch **12**.

In der ersten Ausbildungsvariante besitzt die neue optische Einheit eine integral hergestellte Aufnahmestruktur, die mindestens einen Elementträger aufweist, der durch einen Längsträger oder eine Platte bzw. Schale gebildet ist, wobei dieser Elementträger längs eines Teils seiner Berandung frei ist bzw. nur längs eines Bereiches seiner Berandung an anderen Teilen der Aufnahmestruktur, insbesondere an anderen Elementträgern befestigt ist. Weitere Elementträger können ebenfalls in dieser neuen Form ausgebildet sein, und eine Aufnahmestruktur aus derartigen Trägern kann als offene Aufnahmestruktur bezeichnet werden. Eine solche Aufnahmestruktur nach der Erfindung ist somit eine im wesentlichen offene Aufnahmestruktur, etwa in der Art eines dreidimensionalen Masswerkes, die aus einzelnen meist dünnwandigen, länglichen oder platten- bzw. schalenartigen, zusammengesetzten Elementträgern besteht; die optische Einheit besitzt also keine Hülle. Jeder Elementträger und jeder die Elementträger verbindende Strukturteil kann somit einzeln bezüglich seiner Abmessungen und seiner Festigkeit entsprechend dem von ihm aufgenommenen optischen Element dimensioniert werden; plattenartige Elementträger können insbesondere bezüglich ihrer Wandstärke auf die Dicke der aufzunehmenden optischen Elemente abgestimmt werden.

Der Elementträger ist, wie erwähnt, nur längs eines Bereiches seiner Berandung an anderen Teilen der Aufnahmestruktur befestigt. Dieser Bereich ist kann zusammenhängend sein, so dass der Elementträger gewissermassen fliegend befestigt ist, oder aus wenigen, beispielsweise zwei, Teilbereichen bestehen.

Durch die neue Ausbildung der Aufnahmestruktur der optischen Einheit erzielt man zahlreiche Vorteile, von denen die wichtigsten im folgenden aufgezählt werden:

Es wird im wesentlichen nur dort Material eingesetzt, wo dieses aus Gründen der Abmessungen der optischen Elemente wirklich benötigt wird; dadurch kann die Masse der Aufnahmestruktur verkleinert werden; der Energiebedarf für die Beförderung des Gerätes, an welchem die optische Einheit angebracht ist, wird somit reduziert.

Durch die offene Ausbildung der Aufnahmestruktur bzw. das Fehlen einer Hülle für die optische Einheit werden auch deren Trägheitsmomente reduziert, was zur Folge hat, dass der Leistungsbedarf für eine Nachführung der optischen Einheit ebenfalls minimiert wird; ist anderseits eine bestimmte Energiemenge für die Nachführung der optischen Einheit vorhanden, so kann beispielsweise die Bandbreite der Nachführung gesteigert werden.

Durch die massenarme und offene Ausbildung der Aufnahmestruktur können im weiteren nachteilige Effekte der hohen Temperaturdifferenzen und -gradienten ausgeschaltet oder mindestens weitgehend reduziert werden.

Weitere Elementträger können entweder ähnlich wie die vorbekannten Aufnahmestrukturen, als geschlossene Elementträger in Rohr- oder Kastenform ausgebildet sein; solche Aufnahmestrukturen können dann als komplexe Aufnahmestrukturen bezeichnet werden.

Vorzugsweise werden die Elementträger nicht nur in Anpassung an die Abmessungen und Massen der aufzunehmenden optischen Elemente sondern generell in Anpassung an die aufzunehmende Beanspruchung dimensioniert, um die Masse und die Trägheitsmomente der Aufnahmestruktur soweit wie möglich zu minimieren.

Zu diesem Zwecke hat es sich als geeignet erwiesen, die einzelnen Elementträger mit massevermindernden Ausnehmungen wie beispielsweise Bohrungen und/oder mit verstärkenden Ansätzen wie beispielsweise Rippen, ggf. auch mit Sicken zur Erhöhung der Steifigkeit, zu versehen.

Um Probleme unterschiedlicher Wärmedehnungen zu vermeiden, ist es vorteilhaft, die Elementträger und die darin befestigten optischen Elemente aus Materialien mit mindestens annähernd gleichen Wärmedilatations-Koeffizienten herzustellen.

Die Elementträger der neuen optischen Einheit können einzeln hergestellt und durch Verschraubung, Verbolzung, Vernietung, Verklebung, Verschweissung oder Verlötung miteinander zur Aufnahmestruktur verbunden sein.

In einer anderen bevorzugten Ausbildung der neuen optischen Einheit kann die Aufnahmestruktur integral hergestellt, beispielsweise gepresst, gegossen, gesintert, aus einem Block herausgearbeitet oder aus gebogenem und gegebenenfalls tiefgezogenem Plattenmaterial hergestellt sein.

In der zweiten Ausbildungsvariante der Erfindung werden die neuen optischen Einheiten mit Elementträgern und optischen Elementen aus demselben Material hergestellt.

Als sehr geeignetes Material hat sich beispielsweise ein Werkstoff in der Art des glaskeramischen Werkstoffs 'Zerodur®' erwiesen.

Jedes optische Element kann unmittelbar im zugehörigen Elementträger befestigt sein, beispielsweise durch Verkittung oder Verklebung seines Elementrandes mit dem Rand einer zur Aufnahme des Elementes vorgesehenen Ausnehmung im Elementträger.

Zur Erzielung der erforderlichen Präzision müssen die optischen Elemente in den Elementträgern präzis positioniert sein. Dies kann durch zusammenwirkende Passflächen und/oder durch zwischen den optischen Elementen und de Elementträgern angeordnete Distanzelemente erfolgen.

Die Merkmale der ersten und der zweiten erfindungsgemässen Ausführungsvariante der optische Einheit lassen sich kombinieren, woraus eine in mechanischer und thermischer Hinsicht in jeder Beziehung besonders vorteilhaft optische Einheit resultiert.

Obwohl die optischen Einheiten nach der Erfindung speziell für die Verwendung im Weltraum konzipiert wurden, können sie auch anderweitig eingesetzt werden. Bei einer Verwendung der optischen Einheiten als Bestandteil eines im Weltraum befindlichen Gerätes wird vorteilhaft die Aufnahmestruktur mindestens annähernd isostatisch am Gerät befestigt.

Weitere Eigenschaften und Vorteile der Erfindung werden im folgenden anhand der Beschreibung und mit Bezug auf die Zeichnung ausführlich beschrieben. Es zeigen:
- **Fig. 1**: eine erste optische Einheit nach der Erfindung, in einem Schaubild;
- **Fig. 2**: eine zweite optische Einheit nach der Erfindung, in gleicher Darstellung wie Fig. 1;
- **Fig. 3**: eine dritte optische Einheit nach der Erfindung, in gleicher Darstellung wie Fig. 1 und Fig. 2;
- **Fig. 4**: ein in einem Elementträger befestigtes optisches Element, in einer ersten Ausbildung, geschnitten;
- **Fig. 5**: ein in einem Elementträger befestigtes optisches Element, in einer zweiten Ausbildung, ebenfalls geschnitten, und
- **Fig. 5A**: eine Einzelheit der Fig. 5.

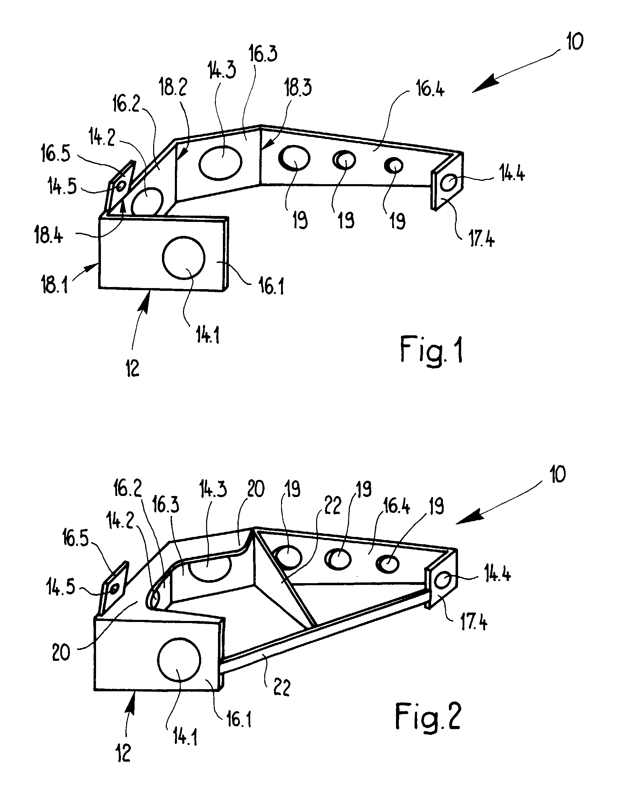

**Fig. 1** zeigt eine erste optische Einheit **10**, deren Aufnahmestruktur **12** eine sehr geringe Masse besitzt. Die optische Einheit **10** enthält fünf optische Elemente **14.1, 14.2, 14.3, 14.4, 14.5**. Jedes optische Element **14.1 bis 14.5**.ist in einem Elementträger **16.1** beziehungsweise **16.2** beziehungsweise **16.3** beziehungsweise **16.4** beziehungsweise **16.5** befestigt. Die drei Elementträger **16.1,16.2** und **16.3** sind durch miteinander verbundene Platten oder eine entsprechend gebogene Platte gebildet, wobei der Elementträger **16.2** an einer seiner Randkanten **18.1** mit dem Elementträger **16.1** und an der gegenüberliegenden Randkante **18.2** mit dem Elementträger **16.3** verbunden ist. Der Elementträger **16.3** ist an der der Randkante **18.2** gegenüberliegenden Kante **18.3** mit dem Elementträger **16.4** verbunden. Der Elementträger **16.4** weist an seinem äusseren Ende ein quer zu seiner Längsrichtung gerichtetes Endteil **17.4** auf, in welchem das optische Element **14.4** aufgenommen ist. Der Elementträger **16.5** ist längs der Randkante **18.4** mit dem Elementträger **16.2** verbunden. Alle übrigen Randkanten der Elementträger **16.1** bis **16.5** sind frei. Der Elementträger **14.4** weist mehrere massereduzierende Ausnehmungen **19** auf. Die Aufnahmestruktur **12** dieser optischen Einheit **10** ist offen und in Ultraleichtbauweise hergestellt. Zur Erhöhung der Biegesteifigkeit bei reduzierter Masse können die Platte(n) mit Sicken versehen sein.

In **Fig. 2** ist eine weitere optische Einheit **10** abgebildet, die dieselben optischen Elemente **14.1** bis **14.5** besitzt wie die in **Fig. 1** dargestellte optische Einheit. Hier ist aber die Aufnahmestruktur **12** dank Verstärkungsrippen **20** an den Elementträgern **16.1** bis **16.3** und dank zusätzlicher versteifender Streben **22** resistenter gegen Deformationen der einzelnen Elementträger **14.1** bis **14.3** bzw. gegen Verwindungen der gesamten Aufnahmestruktur **12**. Dieser Vorteil wird allerdings durch den Nachteil einer grösseren Masse der optischen Einheit erkauft. Die Aufnahmestruktur **12** dieser optischen Einheit ist ebenfalls offen.

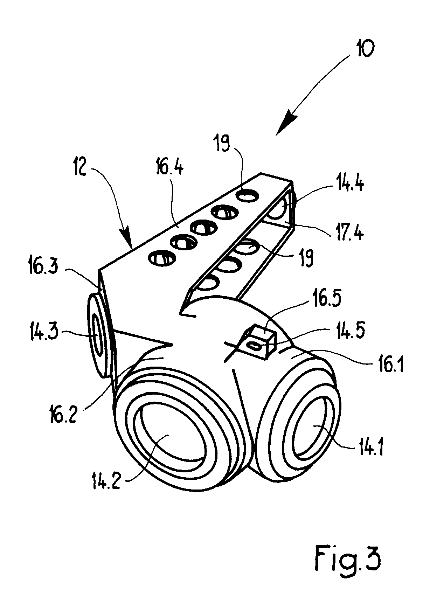

**Fig. 3** zeigt eine noch weitere optische Einheit **10**, wiederum mit denselben optischen Elementen **14.1** bis **14.5**. Die Aufnahmestruktur **12** dieser optischen Einheit **10** ist komplex, das heisst sie umfasst einerseits Trägerelemente wie die offenen Aufnahmestrukturen in Form von Längsträgern bzw. Platten oder Schalen, und anderseits Trägerelemente in Form von Rohren. Die Elementträger **16.3** und **16.5** sind im wesentlichen gleich ausgebildet wie bei der in den **Fig. 1** und **2** dargestellten optischen Einheiten. Der Elementträger **16.4** besteht - abgesehen von seinem Querteil **17.4** - im wesentlichen aus drei Längsträgern, die so zusammengefügt sind, dass sie einen in Längsrichtung des Elementträgers offenen U-förmigem Kanal bilden. Die Elementträger **14.1** und **14.2** sind hier geschlossen, nämlich in Form von Rohren, ausgebildet.

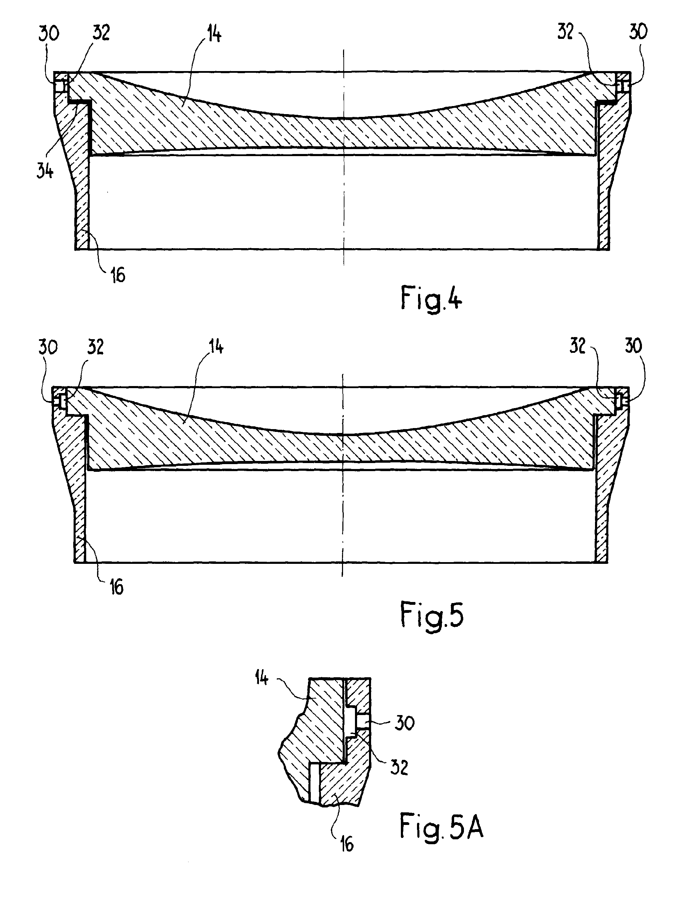

In **Fig. 4** und **Fig. 5** ist je ein in einem Elementträger **16** befestigtes optisches Element **14** dargestellt. Der Elementträger **16** besteht vorzugsweise aus zwei Halbschalen. Das optische Element **14** und der Elementträger **16** sind aus demselben glaskeramischen Material hergestellt. Der Elementträger **16** weist mindestens eine Einspritzbohrung **30** auf; vorteilhaft sind mindestens zwei Einspritzbohrungen vorgesehen. Das innere Ende dieser Einspritzbohrungen mündet in eine Umlaufnute **32**, durch welche ein ringförmiger umlaufender Hohlraum zwischen dem Elementträger **16** und dem optischen Element **14** gebildet wird. Durch mindestens eine der Einspritzbohrungen **30** wird ein geeigneter Klebstoff bzw. Zement in die Umlaufnute **32** gepresst, bis die gesamte Umlaufnute **32** gefüllt ist.

**Fig. 4** zeigt ein Ausführungsbeispiel, bei welchem die genaue Anordnung des optischen Elementes **14** durch Einlegen von Abstandselementen **34**, sogenannten Shims, erreicht wird. **Fig. 5** zeigt ein Ausführungsbeispiel, bei welcher das optische Element **14** direkt auf einem Absatz des Elementträgers **16** aufliegt, wobei gemäss **Fig. 5A** eine Zentrierung vorgesehen ist.

## Patentansprüche

1. Optische Einheit (**10**), insbesondere Schiefspiegelteleskop, umfassend mehrere optische Elemente **(14.1, 14.2, 14.3, 14.4, 14.5)** und eine Aufnahmestruktur (**12**) mit Elementträgern (**16.1, 16.2, 16.3, 16.4, 16.5**) zur Aufnahme der optischen Elemente (**14.1, 14.2, 14.3, 14.4, 14.5**),
**dadurch gekennzeichnet,**
dass die Aufnahmestruktur (**12**) durch einfach zusammenhängende Körper in der Art von Längsträgern (**16.4**), Platten **(16.1, 16.2, 16.3, 16.5)** oder Schalen gebildet ist, deren Dimensionen den Dimensionen der aufzunehmenden optischen Elemente (**14.1, 14.2, 14.3, 14.4, 14.5**) angepasst sind, wobei die Aufnahmestruktur (**12**) integral hergestellt ist und jeder Elementträger (**16.1, 16.2, 16.3, 16.4, 16.5**) längs eines Teils seiner Berandung frei ist, um die Aufnahmestruktur (**12**) offen auszubilden.

2. Optische Einheit (**10**) nach Anspruch **1**,
**dadurch gekennzeichnet,**
dass die Ausbildung jedes Elementträgers (**16.1, 16.2, 16.3, 16.4, 16.5**) den von ihm aufzunehmenden Beanspruchungen angepasst ist.

3. Optische Einheit (**10**) nach mindestens einem der Ansprüche 1 bis 2,
**dadurch gekennzeichnet,**
dass die Aufnahmestruktur (**12**) Streben (**22**) zur Verbindung von Elementträgern (**16.1,16.4**) und/oder an den Elementträgern (**16.4**) angeordnete massereduzierende Ausnehmungen (**19**) wie Bohrungen und/oder an den Elementträgern (**16.1, 16.2, 16.3**) befestigte festigkeitserhöhende Ansätze wie Rippen (**20**) aufweisen.

4. Optische Einheit (**10**) nach mindestens einem der Ansprüche **1** bis **3**,
**dadurch gekennzeichnet,**
dass die integral hergestellte Aufnahmestruktur (**12**) beispielsweise gegossen oder aus einem Block herausgearbeitet ist.

5. Optische Einheit (**10**) nach mindestens einem der Ansprüche **1** bis **4**,
**dadurch gekennzeichnet,**
dass die Elementträger (**16.1** bis **16.5**) und die optischen Elemente (**14.1** bis **14.5**) aus Materialien mit mindestens annähernd gleichen Wärmedilatations-Koeffizienten und/oder Festigkeitseigenschaften hergestellt sind.

6. Optische Einheit (**10**), umfassend mindestens ein optisches Element (**14**) und einen integral hergestellten Elementträger (**16**), in welchem das optische Element befestigt ist,
**dadurch gekennzeichnet,**
dass der integral hergestellte Elementträger (**16**) und das optischen Element (**14**) aus demselben Material hergestellt sind.

7. Optische Einheit (**10**) nach Anspruch **6**,
**dadurch gekennzeichnet,**
dass das Material ein glaskeramischer Stoff, beispielsweise Zerodur®, ist.

8. Optische Einheit (**10**) nach mindestens einem der Ansprüche **1** bis **7**,
**dadurch gekennzeichnet,**
dass das mindestens eine optische Element (**14**) direkt im zugehörigen Elementträger (**16**) befestigt ist, beispielsweise durch Verkittung oder Verklebung.

9. Optische Einheit (**10**) nach Anspruch **8**,
**dadurch gekennzeichnet,**
dass der Elementträger (**16**) an einem das optische Element (**14**) berührenden Teil mindestens eine Einspritzbohrung (**30**) aufweist, und dass an einer Berührungsfläche von Elementräger (**16**) und optischem Element (**14**) ein vorzugsweise umlaufender Hohlraum gebildet ist, in welchen die mindestens eine Einspritzbohrung (**30**) mündet, welcher Hohlraum zur Aufnahme eines geeigneten, durch die mindestens eine Einspritzbohrung (**30**) einspritzbaren Klebstoffes oder Zementes zur Befestigung des optischen Elementes (**14**) im Elementträger (**16**) bestimmt ist.

10. Optische Einheit (**10**) nach mindestens einem der Ansprüche **1** bis **8**,
**dadurch gekennzeichnet,**
dass die optischen Elemente (**14, 14.1** bis **14.5**) in den Elementträgern (**16, 16.1** bis **16.5**) durch zusammenwirkende Passflächen und/oder durch zwischen den optischen Elementen (**14, 14.1** bis **14.5**) und den Elementträgern (**16, 16.1** bis **16.5**) angeordnete Distanzelemente (**34**) positioniert sind.

11. Verwendung der optischen Einheit (**10**) nach mindestens einem der Ansprüche **1** bis **10** als Bestandteil eines zum Einsatz im Weltraum bestimmten Gerätes,
dadurch gekennzeichnet,
dass die Aufnahmestruktur (**12**) mindestens annähernd isostatisch am Gerät befestigt ist.

12. Verwendung nach Anspruch **11**,
**dadurch gekennzeichnet,**
dass eine entfernbare Schutzvorrichtung für die optischen Elemente (**14.1** bis **14.5**) vorhanden ist, um sie während des Transportes in den Weltraum zu schützen.
